# EUROPÄISCHE PATENTSCHRIFT

(11) **EP 3 584 450 B1**
(45) Veröffentlichungstag und Bekanntmachung des Hinweises auf die Patenterteilung: **15.09.2021**
(21) Anmeldenummer: 19168611.2
(22) Anmeldetag: 11.04.2019
(51) Int. Cl.: F15B 11/16

(54) **LAND- ODER BAUWIRTSCHAFTLICH NUTZBARE ARBEITSMASCHINE MIT EINER LASTSIGNALSTEUERUNG EINER ARBEITSHYDRAULIK EINES ANBAUGERÄTS**
AGRICULTURAL OR CIVIL ENGINEERING WORKING MACHINE WITH A LOAD SIGNAL CONTROL SYSTEM OF A HYDRAULIC SYSTEM OF AN ATTACHMENT
ENGIN DE TRAVAIL UTILISABLE DANS L'AGRICULTURE OU LES TRAVAUX PUBLICS AVEC UNE COMMANDE DE SIGNAL DE CHARGE D'UNE SECTION HYDRAULIQUE DE TRAVAIL D'UN APPAREIL AUXILIAIRE

(30) Priorität: 18.06.2018 DE 102018114495
(43) Veröffentlichungstag der Anmeldung: 25.12.2019
(73) Patentinhaber: CLAAS Industrietechnik GmbH, 33106 Paderborn (DE)
(72) Erfinder: Ebbes, Björn, 33106 Paderborn (DE)
(74) Vertreter: CLAAS Gruppe

(56) Entgegenhaltungen:
- EP-A1- 2 679 833
- EP-A1- 3 236 085
- EP-A2- 1 783 378

## Beschreibung

Die Erfindung betrifft eine land- oder bauwirtschaftlich nutzbare Arbeitsmaschine mit Anbaugerät, wobei das Anbaugerät eine Lastsignalsteuerung seiner Arbeitshydraulik umfasst, die zumindest über einen Druckanschluss und einen Tankanschluss mit einem Hydrauliksystem der land- oder bauwirtschaftlich nutzbaren Arbeitsmaschine verbunden ist, mit zumindest einem über ein Wegeventil gesteuerten Verbraucher, über den in einer primären Lastsignalleitung ein primärer Lastdruck erzeugbar ist, wobei der primäre Lastdruck einer Steuereinheit, die einen Volumenstrom in einer zu dem zumindest einen Verbraucher führenden Druckleitung steuert, zugeführt wird und wobei in der Steuereinheit eine bedarfsgerechte Druckanhebung des primären Lastdrucks auf ein Druckniveau eines sekundären Lastdrucks erfolgt.

Ein entsprechendes Hydrauliksystem einer land- oder bauwirtschaftlich nutzbaren Arbeitsmaschine kann als Open-Center-System oder als Closed-Center-System ausgeführt sein. Bei einem Open-Center-System fördert eine Konstantpumpe stets mit ihrer maximalen Leistungsaufnahme, d. h., auch dann, wenn von keinem der hydraulischen Verbraucher eine hydraulische Leistung angefordert wird, einen konstanten drehzahlabhängigen Volumenstrom. Die Folge davon ist, dass eine hohe Verlustleistung und eine entsprechend starke Erwärmung des Druckmittels eintreten.

Daher werden Hydrauliksysteme als Closed-Center-Systeme ausgeführt mit einer in ihrem Fördervolumen veränderbaren Hydraulikpumpe, die folglich einen bedarfsgerechten Volumenstrom liefert. Dabei wird die Fördermenge der als Verstellpumpe ausgebildeten Hydraulikpumpe über ein sogenanntes Load-Sensing-System geregelt. Bestandteil des Load-Sensing-Systems sind eine Lastsignalleitung und eine der Verstelleinrichtung der Verstellpumpe zugeordnete Druckwaage. Über die Lastsignalleitung wird von jedem der Steuerventile, die den einzelnen Verbrauchern der Arbeitshydraulik zugeordnet sind, der jeweils höchste Lastdruck an die Druckwaage gemeldet und die Verstellpumpe baut nur den Lastdruck zuzüglich eines Drucküberschusses auf.

Dadurch wird ermöglicht, dass die Verstellpumpe in einen Stand-By-Zustand zurückgeschwenkt wird, sobald sich die Steuerventile in ihrer Neutralstellung befinden und keinen Volumenstrom abfordern. Der Pumpendruck pendelt sich so ein, dass die Druckdifferenz zwischen dem Lastdruck der Druckwaage und dem Förderdruck der Pumpe immer gleich bleibt. Werden ein oder mehrere Ventile betätigt, wird der Druck über die Lastsignalleitung an die Druckwaage weitergeleitet, wobei diese durch einen Vergleich des Lastdrucks und des Pumpendrucks den Energiebedarf des Systems feststellt. Pumpendruck und Pumpenförderstrom werden so stets automatisch an den jeweiligen Bedarf angepasst.

Der jeweils höchste Lastdruck wird vom entsprechenden Steuerventil an die Verstellpumpe gemeldet, woraufhin die Verstellpumpe nur den Lastdruck zuzüglich eines geringen Drucküberschusses aufbaut. Bei einer parallelen Betätigung mehrerer Verbraucher wird der Pumpenförderstrom durch den Einsatz sogenannter Sektionsdruckwaagen unabhängig von den verschiedenen Lastdrücken so auf die Verbraucher aufgeteilt, wie es dem Verhältnis der Öffnungsquerschnitte der Steuerventile entspricht.

An den Hydraulikkreis der Arbeitshydraulik des land- oder bauwirtschaftlich nutzbaren Fahrzeuges können über sogenannte Power-Beyond-Anschlüsse Arbeitsgeräte angekuppelt werden, wobei diese angekuppelten Arbeitsgeräte hydraulische Verbraucher, beispielsweise in Form von Hydraulikzylindern oder Hydromotoren aufweisen. Da diese Verbraucher jeweils über ein Wegeventil gesteuert oder betrieben werden, weisen die Power-Beyond-Anschlüsse jeweils zumindest zwei kuppelbare Remote-Anschlüsse, nämlich den einer Druckleitung und den eines Rücklaufs auf. Bei einem landwirtschaftlich nutzbaren Fahrzeug können in dessen Front- und Heckbereich, in dem sich in der Regel auch jeweils ein Dreipunkt-Kraftheber zur Aufnahme eines Arbeitsgerätes befindet, solche Power-Beyond-Anschlüsse vorgesehen sein.

Wird dieser Power-Beyond-Anschluss mit einem Load-Sensing-System kombiniert, so wird das Power-Beyond-Anschlusssystem um einen Anschluss für eine zu den Wegeventilen des Anbaugeräts führende primäre Lastsignalleitung erweitert. Dadurch erreicht man, dass die Verstellpumpe des landwirtschaftlich nutzbaren Fahrzeugs die Steuerventile des Anbaugeräts nur dann mit Druckmittel versorgt, wenn die entsprechende Hydraulikleistung benötigt wird. Folglich regelt dieses System den Volumenstrom und den Druck passend zum Bedarf. In der primären Lastsignalleitung steigt der Lastdruck an, wenn vom Bediener des Arbeitsgerätes eine von dessen Hydraulikfunktionen abgerufen wird. Bei Verwendung des Load-Sensing-Systems für ein an das Fahrzeug angekuppeltes Arbeitsgerät können allerdings beträchtliche Druckverluste in den Verbindungselementen zwischen Pumpe und Anbaugerät auftreten, so dass die Regelgröße für die Hydraulikpumpe zusammenbricht. Das hat zur Folge, dass von der Verstellpumpe kein ausreichender Volumenstrom zur Verfügung gestellt werden kann. Solche Druckverluste können aber auch in dem Hydrauliksystem der land- oder bauwirtschaftlich nutzbaren Arbeitsmaschine auftreten, da an dieser bei Arbeitsvorgängen viele hydraulische Funktionen gleichzeitig aktiviert werden.

Ein Hydrauliksystem für einen Traktor der im Oberbegriff des Patentanspruchs 1 angegebenen Gattung ist aus der EP 1 760 325 B1 bekannt. Aus der Figur und der Beschreibung dieser Druckschrift geht ein Hydrauliksystem hervor, bei welchem einem Druck- und Förderstromregler über eine Lastsignalleitung ein gemeinsames Lastdrucksignal der über einen Steuerblock gesteuerten Verbraucher des Hydrauliksystems und über einen Hilfssteuerblock gesteuerte Hilfsdruckmittelverbraucher eines Anbaugerätes zugeführt wird. Über die Lastsignalleitung wird von jedem der Steuerblöcke, die den einzelnen Verbrauchern zugeordnet sind, der jeweils höchste Lastdruck an den Druck- und Förderstromregler gemeldet, der dazu dient, über einen Verstellkolben die Förderleistung der Verstellpumpe in Abhängigkeit von dem Lastdruck zu regeln.

Den Steuerblöcken sind innerhalb einer Druckleitung Druckregelventile vorgeschaltet. Eine Lastdruckleitung des Hydrauliksystems ist über ein hydraulisches Kuppelelement mit einer sogenannten Hilfslastdruckleitung der Arbeitshydraulik des Anbaugerätes verbunden. Werden ein oder mehrere Ventile der Steuerblöcke betätigt, so wird der Druck über die Lastsignalleitung an den Druck- und Förderstromregler weitergeleitet, wobei diese durch einen Vergleich des Lastdrucks und des Pumpendrucks den Energiebedarf des Systems feststellt. Pumpendruck und Pumpenförderstrom werden so stets automatisch an den jeweiligen Bedarf angepasst. Am Ende der Lastdruckleitung, das mit der Hilfslastdruckleitung verbunden ist, befindet sich innerhalb des Hydrauliksystems eine Verstärkerschaltung, die ein Stromregelventil, einen Druckregler und zwei Blenden aufweist. Der über eine erste Lastsignalleitung als Steuerdruck auf den Druckregler übertragene Anstieg des Lastdruckes der Hilfslastdruckleitung sorgt für dessen Betätigung in eine Stellung, in der das Lastsignal in der zum Druck- und Förderstromregler führenden Lastsignalleitung erhöht wird. Weiterhin wird in diesem Stand der Technik auch darauf hingewiesen, dass die entsprechende Lösung auch für ein Hydrauliksystem mit einer Konstantpumpe verwendet werden kann, wobei dann die Lastsignalleitung mit einem Druck- und Durchflussregler verbunden sein soll.

Eine andere bekannte land- oder bauwirtschaftlich nutzbare Arbeitsmaschine ist aus der EP 1 783 378 A2 bekannt.

Es ist Aufgabe der vorliegenden Erfindung, für eine Arbeitshydraulik eines mit einer land- oder bauwirtschaftlich nutzbaren Arbeitsmaschine verbundenen Anbaugerätes Mittel vorzusehen, mittels welcher alle in der Arbeitshydraulik vorgesehene Verbraucher bedarfsgerecht mit Druckmittel versorgt werden, um mit diesen die jeweils erforderlichen Stellgeschwindigkeiten zu erzielen.

Diese Aufgabe wird, ausgehend vom Oberbegriff des Patentanspruchs 1 durch dessen kennzeichnende Merkmale gelöst. Vorteilhafte Ausgestaltungen sind in den von diesem abhängigen Patentansprüchen wiedergegeben, welche jeweils für sich genommen oder in Kombination miteinander einen Aspekt der Erfindung darstellen können.

Danach ist eine Lastsignalsteuerung für eine Arbeitshydraulik eines Anbaugeräts vorgesehen, wobei die Arbeitshydraulik zumindest über einen Druckanschluss und einen Tankanschluss mit einem Hydrauliksystem einer land- oder bauwirtschaftlich nutzbaren Arbeitsmaschine verbunden ist. Mit einer entsprechenden Lastsignalsteuerung soll beim Betrieb von hydraulischen Verbrauchern des Anbaugeräts dafür gesorgt werden, dass das zur Verfügung gestellte Druckmittelvolumen stets bedarfsgerecht an den Volumenstrombedarf sämtlicher hydraulischer Verbraucher angepasst ist. Die Arbeitshydraulik des Anbaugerätes weist somit zumindest einen über ein Wegeventil gesteuerten Verbraucher auf, über den in einer primären Lastsignalleitung ein primärer Lastdruck erzeugbar ist. Dieser primäre Lastdruck wird einer Steuereinheit zugeführt, die einen Volumenstrom in einer zu dem zumindest einen Verbraucher führenden Druckleitung steuert, wobei in der Steuereinheit eine bedarfsgerechte Druckanhebung des primären Lastdrucks auf ein Druckniveau eines sekundären Lastdrucks erfolgt. Beispielsweise wird bei einem Closed-Center-System in Abhängigkeit von diesem sekundären Lastdruck über eine Druckwaage und einen Verstellzylinder das Fördervolumen einer Verstellpumpe entsprechend dem Volumenstrombedarf verändert.

Dabei soll gemäß der Erfindung die Steuereinheit innerhalb der Arbeitshydraulik des Anbaugeräts angeordnet sein und ein Druckregelventil aufweisen. Das Druckregelventil ist eingangsseitig mit der Druckleitung und der primären Lastsignalleitung sowie ausgangsseitig mit einer sekundären Lastsignalleitung verbunden. Ein Regelkolben des Druckregelventils ist einerseits mit dem primären Lastdruck sowie andererseits mit dem sekundären Lastdruck beaufschlagt. Folglich kann der Hersteller des Anbaugerätes die unmittelbar in diesem angeordnete Steuereinheit derart auslegen und ansteuern, dass über diese der primäre Lastdruck bedarfsgerecht angehoben wird, um an den hydraulischen Verbrauchern die erforderlichen Stellgeschwindigkeiten zu erzielen. Darüber hinaus ist von Vorteil, dass auch Leckageverluste in der primären Lastsignalleitung unmittelbar innerhalb der Arbeitshydraulik ausgeglichen werden. Somit kann ein zuverlässiger und effizienter Betrieb der Lastsignalsteuerung sichergestellt werden.

Demgegenüber erfolgt nach der EP 1 760 325 B1 bei einem Betrieb des Traktors mit einem Anbaugerät die lastsignalabhängige Druckanhebung mittels eines traktorseitigen Verstärkerkreises, so dass eine individuelle Anpassung an das jeweilige Anbaugerät sowie die mit diesem durchzuführenden Arbeitsschritte unter dem Aspekt einer Effizienzsteigerung nicht möglich ist.

In weiterer Ausgestaltung der Erfindung ist vorgesehen, dass das Druckregelventil neben seiner Steuerung über den primären Lastdruck eine in die gleiche Betätigungsrichtung wirkende Steuerung aufweist, mit der der Regelkolben zur Anhebung des sekundären Lastdruckes um einen einstellbaren Druckwert mit einer Kraft eines Servomittels beaufschlagbar ist. Die auf den Regelkolben übertragene Kraft des Servomittels ist proportional zu einer durch die Druckanhebung auf die Gegenseite des Regelkolbens wirkenden hydraulischen Kraft. Bei einer entsprechenden Beaufschlagung des Regelkolbens durch das Servomittel wird die Druckleitung mit der sekundären Lastdruckleitung verbunden, so dass der sekundäre Lastdruck ansteigt, bis dieser den Regelkolben wieder gegen die Kraft des Servomittels zurückschiebt. Somit wird eine bedarfsgerechte Anpassung des sekundären Lastsignals erzielt, um die für den Volumenstrombedarf des jeweiligen Verbrauchers des Anbaugeräts erforderliche Druckmittelmenge zur Verfügung zu stellen. Das Servomittel kann dabei elektromagnetisch, elektromechanisch oder hydraulisch wirken,

Mittels einer elektrohydraulischen Steuerung des elektrisch proportionalen Druckregelventils wird eine dynamische und bedarfsgerechte Druckanhebung des Load-Sensing-Signals der Arbeitshydraulik erzielt. Dabei wird nicht das absolute Druckniveau des sekundären Lastdruckes sondern ein zum primären Lastdruck addierter variabler Wert geregelt. Dieser variable Wert kann nach einer PI-Kennlinie des Druckregelventils als Regeldruck über den Strom eingestellt werden.

Die hydraulisch auf das Druckregelventil wirkende Kraft wird von einer Kraft eines Hub- oder Zugmagneten überlagert, die einem dem Magneten zugeführten Strom proportional ist. Wird ein hydraulischer Verbraucher der Arbeitshydraulik des Anbaugeräts geschaltet, so wird mittels eines geregelten Stroms, der der elektrohydraulischen Steuerung des elektrisch proportionalen Druckregelventils zugeführt wird, am Druckregelventil der primäre Lastdruck um einen funktionsgerechten Druckwert dp angehoben, so dass folglich die Funktion des Verbrauchers sichergestellt werden kann. Außerdem können mit Hilfe dieser Lösung Druckverluste in der Arbeitshydraulik, insbesondere in Versorgungsleitungen, einer Pumpenleitung, Prioritätsventilen, Kupplungen, Schläuchen usw. bei hohen Volumenströmen, die gegebenenfalls zur Unterversorgung einer Funktion führen würden, individuell kompensiert werden. Werden weitere Funktionen aktiviert, so dass der Volumenstrombedarf weiter ansteigt, so kann der Wert der Druckanhebung entsprechend erhöht werden. Wird dagegen nur ein kleiner Verbraucher aktiviert, wird es sich um einen entsprechend reduzierten Wert handeln oder das Servomittel wird nicht zur Anhebung des Lastdruckes aktiviert.

Die Steuerung des Druckregelventils kann derart ausgelegt sein, dass sich bei unbestromtem Magneten ein sekundärer Lastdruck von 0 bar einstellt, so dass die im Hydrauliksystem der Arbeitsmaschine vorgesehene Pumpe mit minimalem Regeldruck betrieben werden kann, woraus ein effizienter Stand-by-Betrieb resultiert. Aufgrund der Kombination von hydraulischer und elektromagnetischer Betätigung des Druckregelventils ergibt sich außerdem eine Fail-safe-Funktion, denn bei Ausfall der elektromagnetischen Funktion wird immer noch hydraulisch der primäre Lastdruck auf das Druckregelventil übertragen.

Die Anhebung des sekundären Lastdruckes auf 0 bar entspricht einem standardmäßig wirkenden LS-System mit ausschließlich hydraulischer Verstellung des Regelkolbens. Ist somit kein Verbraucher geschaltet, wird der Lastdruck, der in diesem Fall dem Tankdruck entspricht über das Druckregelventil unverändert an einen Pumpenregler der Verstellpumpe weitergeleitet. Daraus resultiert auch die Fail-safe-Funktion. Der Vorteil liegt darin, dass nicht, wie aus dem Stand der Technik bekannt, für einen Großverbraucher der entsprechende Regeldruck der Verstellpumpe generell angehoben werden muss, sondern dass dies erfindungsgemäß nur dann maßgeschneidert erfolgt, wenn die Leistung auch gebraucht wird. Bei bekannten LS-Boost-Ventilen wird demgegenüber der LS-Sekundärdruck permanent um einen fixen Wert angehoben, der sich nach dem kritischsten Verbraucher richtet

Weiterhin ist vorgesehen, dass das Druckregelventil als 3/2-Wegeventil ausgebildet ist. Dieses 3/2-Wegeventil kann einen als Regelkolben dienenden Ventilschieber aufweisen, der an einer ersten Stirnseite von dem Elektromagneten und dem primären Lastdruck sowie an einer zweiten Stirnseite von einer Druckfeder und dem sekundären Lastdruck beaufschlagt ist. Dabei kann die elektromagnetische Betätigung des Druckregelventils eine manuelle Einstellvorrichtung aufweist. Weiterhin soll die elektromagnetische Betätigung des Druckregelventils über eine ECU einstellbar sein, wobei die Kraft des Magneten proportional einem in Abhängigkeit vom primären Lastdruck geregelten Strom ist.

Dabei kann die ECU zur Ermittlung einer minimal erforderlichen Anhebung des sekundären Lastdruckes mit Sensoren verbunden und eine Durchführung dieses Vorgangs in einem Kalibrierzyklus vorgesehen sein. Zur weiteren Optimierung der Lastsignal-Verluste ist vorzugsweise ein automatischer Lern- oder Kalibrierprozess vorgesehen, der bei der erstmaligen Inbetriebnahme oder bei Arbeitsbeginn des Anbaugerätes gemeinsam mit einer bestimmten Arbeitsmaschine, vorzugsweise Traktor, erfolgt. Dieser erfolgt durch Anheben des sekundären Lastdruckes bis ein kritischer Verbraucher, wie z.B. ein hydraulischer Ballenwickler einer Rundballenpresse die erwartete Geschwindigkeit erreicht. Auf diese Weise kann für jeden Traktor und jede Sequenz eines Arbeitszyklusses in jeder Ausstattungsvariante die minimal erforderliche Anhebung des sekundären Lastdruckes ermittelt werden.

Außerdem kann vorgesehen sein, dass dem zumindest einen Wegeventil eine in der Druckleitung angeordnete Zulaufdruckwaage vorgeschaltet ist, die einerseits über einen Druck seines Arbeitsanschlusses des Wegeventils und andererseits über den primären Lastdruck sowie eine Druckfeder betätigt ist. Diese Zulaufdruckwaage sperrt den zum Wegeventil führenden Arbeitsanschluss gegenüber der Druckleitung, wenn dieser unter Berücksichtigung des primären Lastdruckes einen Grenzwert überschreitet.

Gemäß einer ersten Ausgestaltung der Erfindung soll das Hydrauliksystem der Arbeitsmaschine als Hauptpumpe eine Verstellpumpe aufweisen, deren Fördervolumen über einen Verstellzylinder einstellbar ist, wobei der einer Druckwaage zugeführte sekundäre Lastdruck über diese zur Bildung einer ersten Druckdifferenz mit einem Pumpendruck vergleichbar und ein Förderstrom der Verstellpumpe aufgrund dieser Druckdifferenz regelbar ist. Dabei soll die sekundäre Lastsignalleitung mit einer Lastsignalleitung des als Closed-Center-System ausgebildeten Hydrauliksystems der Arbeitsmaschine verbunden sein.

Somit verstärkt das Druckregelventil ein von einem oder mehreren Wegeventilen in der primären Lastsignalleitung erzeugtes Lastdrucksignal mittels einer Druckerhöhung aus der Druckleitung, wobei, wie bereits dargelegt, das hydraulische Lastsignal um einen elektromagnetisch übertragenen Wert erhöht wird. Der daraus resultierende sekundäre Lastdruck wird über den Power-Beyond-Anschluss in das Hydrauliksystem der Arbeitsmaschine übertragen, in welchem der geänderte Lastdruck eine Verstellung der Verstellpumpe und somit eine Anpassung des Volumenstromes bewirkt.

Nach einer zweiten Ausgestaltung der Erfindung soll das Hydrauliksystem der Arbeitsmaschine als Hauptpumpe eine Konstantpumpe aufweisen, wobei die Steuereinheit eine parallel zum Druckregelventil angeordnete Umlaufdruckwaage aufweist, die eingangsseitig mit der Druckleitung und ausgangsseitig mit einer Tankleitung verbunden ist, und wobei die Umlaufdruckwaage einerseits über den Druck der Druckleitung und andererseits über den sekundären Lastdruck vorgesteuert ist. In diesem Fall ist das Hydrauliksystem der Arbeitsmaschine als Open-Center-System ausgebildet, so dass der sekundäre Lastdruck der Arbeitshydraulik des Anbaugeräts nicht auf das Hydrauliksystem übertragen wird. Der sekundäre Lastdruck steuert die Umlaufdruckwaage, die die Druckleitung bei sinkendem Lastdruck mit der Tankleitung verbindet.

Dabei können die Standardschnittstellen zwischen Arbeitsmaschine, vorzugsweise Traktor, und Anbaugerät genutzt werden. Ist das Druckregelventil unbestromt, so beträgt der auf die Umlaufdruckwaage übertragene sekundäre Lastdruck 0 bar. An dieser stellt sich ein der Federkraft proportionaler Druck in der Druckleitung ein. Aufgrund der Addition der elektromagnetisch erzeugten Kraft kann diese Feder sehr schwach ausgelegt werden und somit der Umlaufdruck auf einen sehr niedrigen Wert im Sinne eines effizienten Stand-by-Betriebs reduziert werden. Wird ein hydraulischer Verbraucher geschaltet, wird mittels eines geregelten Stroms am Druckregelventil der primäre Lastdruck um einen Wert dp auf einen funktionsgerechten sekundären Lastdruck angehoben, woraus mit Hilfe der Umlaufdruckwaage der erforderliche Umlaufdruck erzielt wird. Werden weitere Funktionen aktiviert, so dass der Volumenstrombedarf weiter steigt, so kann der Umlaufdruck weiter angehoben werden.

Außerdem kann in Weiterbildung der Erfindung die Steuereinheit wahlweise an ein als Open-Center-System oder als Closed-Center-System ausgebildetes Hydrauliksystem der Arbeitsmaschine anschließbar sein, wobei die Umlaufdruckwaage bei dessen Betrieb in einem Closed-Center-System blockiert ist. Die erfindungsgemäße Steuereinheit ist folglich stets mit einer Umlaufdruckwaage und einem Anschluss LS-dyn-out der sekundären Lastsignalleitung versehen. Bei einem Betrieb des Arbeitsgeräts mit einer eine Konstantpumpe aufweisenden Arbeitsmaschine, also einem Open-Center-System, wird der Anschluss verschlossen, so dass die sekundäre Lastsignalleitung mit der Umlaufdruckwaage verbunden ist. Weist die Arbeitsmaschine hingegen eine Verstellpumpe auf, so wird die Umlaufdruckwaage in einer Stellung blockiert, in der diese die Druckleitung sperrt, wobei der Anschluss LS-dyn-out mit dem Hydrauliksystem verbunden ist. Folglich sind Anbaugeräte, die die erfindungsgemäße Steuereinheit aufweisen, universell mit unterschiedlichen Typen von Arbeitsmaschinen kombinierbar.

Das Druckregelventil kann eine als Cartridgelösung ausgeführte Anordnung aufweisen. Dabei weist das Druckregelventil einen Ventilschieber auf, der innerhalb einer in einem Ventilgehäuse angeordneten Cartridgehülse begrenzt verschiebbar geführt ist, wobei der Ventilschieber an einer ersten Stirnfläche mit dem primären Lastdruck p_{LS_primär} und über eine Ankerstange der elektromagnetischen Betätigung mit einer Kraft beaufschlagbar ist. Der Ventilschieber weist dabei mit einem hohlkolbenartig ausgebildeten Ende in Richtung der zu diesem konzentrisch verlaufenden Lastsignalleitung. Über Steuerkanten sowie Querbohrungen des Ventilschieber sowie des Ventilgehäuses erfolgt je nach Stellung desselben wahlweise eine Druckmittelströmung zwischen der sekundären Lastsignalleitung einerseits sowie der primären Lastsignalleitung oder der Druckleitung andererseits. Der Ventilschieber wird folglich an einer ersten Stirnfläche mit dem primären Lastdruck und an der zweiten Stirnfläche mit dem sekundären Lastdruck beaufschlagt sein. Der Ventilschieber liegt mit seiner ersten Stirnfläche an einer Ankerstange der elektromagnetischen Betätigung an.

Bei geringem primären Lastdruck und unbestromtem Magneten nimmt der Ventilschieber eine Stellung ein, in der die primäre und die sekundäre Lastsignalleitung miteinander verbunden sind. Wenn der bestromte Magnet den Ventilschieber gegenüber der Cartridgehülse verschiebt, gelangt über die Steuerkanten Druckmittel aus der Druckleitung in die sekundäre Lastsignalleitung und verstärkt das Lastsignal. Der Druck in der sekundären Lastsignalleitung steigt an, bis die auf den Regelkolben wirkende Kraft den Ventilschieber wieder gegen die Kraft des Magneten zurückschiebt.

Zur weiteren Erläuterung der Erfindung wird auf die Zeichnungen verwiesen, in denen Ausführungsbeispiele vereinfacht dargestellt sind. Es zeigen:
- Figur 1: einen hydraulischen Schaltplan eines als Closed-Center-System ausgebildeten Hydrauliksystems für eine land- oder bauwirtschaftlich nutzbare Arbeitsmaschine, insbesondere Traktor, an das über Power-Beyond-Anschlüsse eine Arbeitshydraulik eines Anbaugeräts ankuppelbar ist, wobei innerhalb dieser Arbeitshydraulik eine erfindungsgemäße Steuereinheit angeordnet ist,
- Figur 2: die in der Arbeitshydraulik nach Figur 1 verwendete Steuereinheit, separat dargestellt,
- Figur 3: einen hydraulischen Schaltplan einer Steuereinheit für eine Arbeitshydraulik eines Anbaugerätes die für einen Betrieb mit einem eine Konstantpumpe aufweisenden Hydrauliksystem vorgesehen ist, wobei folglich das Hydrauliksystem als Open-Center-System ausgebildet ist,
- Figur 3a: eine teilweise Ansicht des gemäß der Ausführungsform der Figur 3 vorgesehenen Hydrauliksystems der Arbeitsmaschine, von dem nur eine von einer Konstantpumpe ausgehende Druckleitung und eine Rücklaufleitung dargestellt sind,
- Figur 4: eine Ausführungsform einer Steuereinheit, die universell einsetzbar, also mit Hydrauliksystemen von Arbeitsmaschinen, die als Closed-Center- oder Open-Center-System ausgeführt sind, kombinierbar ist, und
- Figur 5: einen Teillängsschnitt durch eine Ausführungsform eines elektromagnetisch betätigten Druckregelventil.

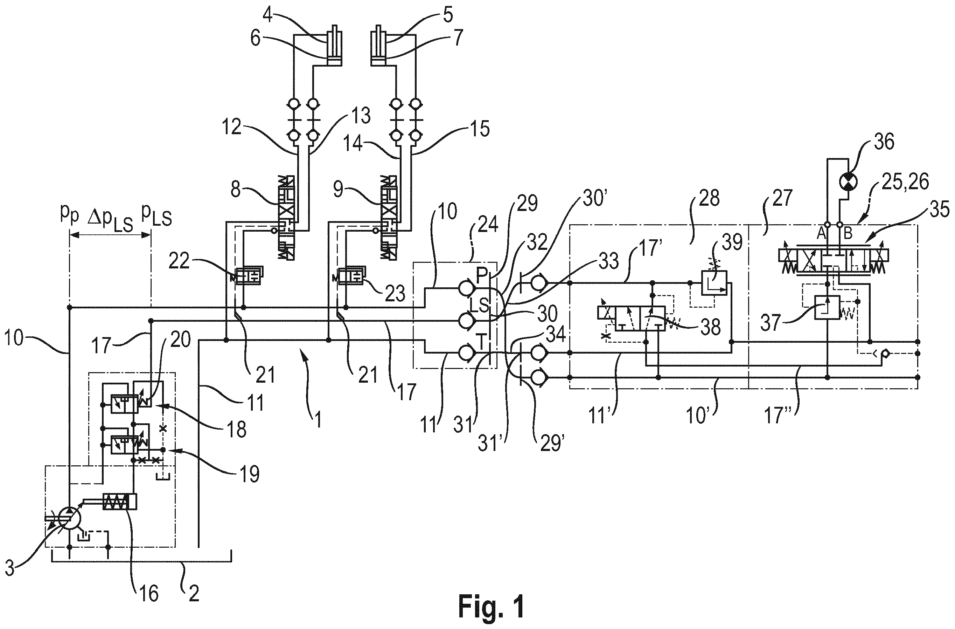

In der Figur 1 ist mit 1 ein Hydrauliksystem bezeichnet, die beispielsweise für einen landwirtschaftlichen Traktor oder ein landwirtschaftliches Systemfahrzeug vorgesehen ist. Dieses Hydrauliksystem 1 ist als Closed-Center-System ausgebildet, bei dem Druckmittel aus einem Tank 2 über eine Verstellpumpe 3, die vorzugsweise als Axialkolbeneinheit nach dem Schrägachsenprinzip ausgebildet ist, zwei als doppelt wirkende Hydraulikzylinder 4 und 5 ausgebildeten Verbrauchern 6 und 7 zugeführt wird. Dabei sind den Hydraulikzylindern 4 und 5 Steuergeräte 8 und 9 zugeordnet, die als elektromagnetisch betätigte, mit Federzentrierung versehene 4/4-Wegeventile ausgebildet sind. Die Hydraulikzylinder 4 und 5 können beispielsweise jeweils für Hubeinrichtungen eines Front- und eines Heckkrafthebers des Traktors oder Systemfahrzeugs vorgesehen sein.

Das Druckmittel wird von der Verstellpumpe 3 aus über eine Druckleitung 10 zu den Steuergeräten 8 und 9 gefördert, wo es in entsprechenden Stellungen dieser Steuergeräte 8 und 9 in eine Rücklaufleitung 11 und somit wieder zurück in den Tank 2 gelangen kann. In der in Figur 1 gezeigten Stellung der jeweiligen Steuergeräte 8 und 9 sind deren Arbeitsleitungen 12, 13, 14 und 15 abgesperrt.

Wie bereits dargelegt kann das Fördervolumen der Verstellpumpe 3 verstellt werden, wozu ein einfach wirkender Verstellzylinder 16 vorgesehen ist. Dabei ist dieser Verstellzylinder 16 an eine im Hydrauliksystem 1 vorgesehene Lastsignalleitung 17 über eine Druckwaage 18 und einen Druckregler 19 angeschlossen. Die Lastsignalleitung 17 ist derart mit jedem der Steuergeräte 8 und 9 verbunden, dass über sie ein Druck an die Druckwaage 18 weitergegeben werden kann, wenn über das jeweilige Steuergerät 8 oder 9 eine Druckmittelbeaufschlagung der Hydraulikzylinder 4 oder 5 erfolgt.

Nach der Figur 1 befindet sich die Verstellpumpe 3 in ihrem Stand-by-Betrieb, d. h., bei einer Verstellpumpe nach dem Schrägachsenprinzip befindet sich die entsprechende Axialkolbeneinheit in einem Zustand mit geringem Schwenkwinkel und somit geringem Verdrängungsvolumen. In diesem Zustand fördert die Verstellpumpe 3 nur eine sehr geringe Menge Hydrauliköl und baut nur einen geringen Druck auf. Der Pumpendruck pₚ pendelt sich so ein, dass die Druckdifferenz Δp_{LS} zwischen dem Lastdruck p_{LS} der Druckwaage 18 und dem Förderdruck pₚ der Verstellpumpe 3 immer gleich bleibt.

Wird nun aber, wie bereits angegeben, eines der beiden oder beide Steuergeräte 8, 9 betätigt, so steigt der Druck in der sekundären Lastsignalleitung 17 an und dieser erhöhte Lastdruck p_{LS} wirkt auf die Druckwaage 18, über die der Druckregler 19 vorgesteuert wird. Dieser Lastdruck p_{LS} wirkt in die gleiche Richtung wie eine an der Druckwaage 18 vorgesehene Druckfeder 20, so dass die Druckwaage 18 durch den Vergleich des Lastdrucks p_{LS} und des Pumpendrucks pₚ den Energiebedarf des Systems feststellen kann. Der Pumpendruck pₚ und der Pumpenförderstrom werden so automatisch an den jeweiligen Bedarf angepasst. Der jeweils höchste Lastdruck p_{LS} wird somit vom jeweiligen Steuergerät 8 und/oder 9 an die Verstellpumpe 3 gemeldet, und diese baut nur den Lastdruck zuzüglich eines geringen Drucküberschusses (Regel - Δp) auf.

Von der Lastsignalleitung 17 führen Leitungsabschnitte 17a und 17b zu dem jeweiligen Steuergerät 8 und 9, wobei zwischen der sekundären Lastsignalleitung 17 und diesen Leitungszweigen 17a sowie 17b jeweils ein Wechselventil 21 angeordnet ist. Weiterhin sind in den zu den Steuergeräten 8 und 9 führenden Abschnitten der Druckleitung 10 Sektionsdruckwaagen 22 und 23 vorgesehen. Diese sollen bei einer parallelen Betätigung mehrerer Verbraucher 6, 7 dafür sorgen, dass der Pumpenförderstrom unabhängig von den verschiedenen Lastdrücken so auf die Verbraucher 6, 7 aufgeteilt wird, wie es dem Verhältnis der Öffnungsquerschnitte der Steuergeräte 8 und 9 entspricht.

Insgesamt wird dadurch erreicht, dass die Leistungsaufnahme der Verstellpumpe 3 permanent an den Bedarf angepasst wird. Der Wirkungsgrad ist, insbesondere im Feinsteuerbereich, erheblich größer als bei einem sogenannten Open-Center-System. Die Stellgeschwindigkeiten der Verbraucher 6 und 7 wird nicht durch sich ändernde Lastdrücke beeinflusst, so dass ein Gegensteuern nicht erforderlich ist.

Nach der Figur 1 ist weiterhin ein sogenanntes Power-Beyond-Anschlusssystem 24 des Arbeitsfahrzeuges vorgesehen, das zur hydraulischen Verbindung des Hydrauliksystems 1 mit einer Arbeitshydraulik 25 eines nicht näher dargestellten Anbaugerätes dient, wobei von der Arbeitshydraulik 25 eine Steuereinheit 26 dargestellt ist. Die Steuereinheit 26 besteht aus einem ersten Steuerblock 27 und einem zweiten Steuerblock 28. Zur Kupplung der Arbeitshydraulik 25 an das Hydrauliksystem 1 weisen die Druckleitung 10 einen mit P bezeichneten Remote-Anschluss 29, die Lastsignalleitung 17 einen mit LS bezeichneten Remote-Anschluss 30 und die Rücklaufleitung 11 einen mit T bezeichneten Remote-Anschluss 31 auf.

Vom Remote-Anschluss 29 der Druckleitung 10 geht ein Hydraulikschlauch 32 aus, der mit einem Remote-Anschluss 29' einer Druckleitung 10' der Arbeitshydraulik 25 verbunden ist. Außerdem sind Hydraulikschläuche 33 und 34, von denen der Hydraulikschlauch 33 vom Remote-Anschluss 30 der Lastsignalleitung 17 zu einem Remote-Anschluss 30' einer sekundären Lastsignalleitung 17' der Arbeitshydraulik 25 und der Hydraulikschlauch 34 vom Remote-Anschluss 31 zu einem Remote-Anschluss 31' einer Rücklaufleitung 11'der Arbeitshydraulik 25 führt. Die Druckleitung 10' und die Rücklaufleitung 11' sind mit einem innerhalb des Steuerblocks 27 vorgesehenen Wegeventil 35 verbunden, das über Arbeitsanschlüsse A und B einem in diesem Fall als Hydromotor ausgebildeten Verbraucher 36 zugeordnet ist.

Innerhalb der Druckleitung 11' ist dem Wegeventil 35 eine Zulaufdruckwaage 37 vorgeschaltet, die eine Druckfeder 37a aufweist. Diese regelt den Druckabfall über das Wegeventil 35 und macht dieses damit zu einem Volumenstromregelventil. Eine primäre Lastsignalleitung 17" ist derart mit dem Wegeventil 35 verbunden, dass über sie ein primärer Lastdruck p_{LS_primär} an ein im Steuerblock 28 angeordnetes Druckregelventil 38 weitergegeben werden kann, wenn über das Wegeventil 35 eine Druckmittelbeaufschlagung des Verbrauchers 36 erfolgt. Weiterhin ist im Steuerblock 28 ein Druckbegrenzungsventil 39 zur Begrenzung des sekundären Lastdruckes p_{LS_sekundär} angeordnet.

Das Druckregelventil 38 ist als 3/2-Wegeventil ausgebildet und eingangsseitig an die primäre Lastsignalleitung 17" und an die Druckleitung 10' angeschlossen. Eine Steuerung des Druckregelventils 38 erfolgt einerseits über den primären Lastdruck p_{LS_primär} sowie über eine elektromagnetische Betätigung 40 und andererseits über eine Druckfeder 41 sowie den sekundären Lastdruck p_{LS_sekundär}. Dabei wird der sekundären Lastdruck p_{LS_sekundär} mittels der elektromagnetischen Betätigung 40 geregelt, indem zum primären Lastdruck p_{LS_primär} ein variabler Wert addiert wird. Diese Druckerhöhung aufgrund eines Lastsignals wird mittels einer ECU 42 gesteuert, und der Wert kann manuell am Druckregelventil 38 oder mittels der ECU 42 eingestellt werden.

Das Druckregelventil 38 verbindet in seiner Grundstellung die primäre Lastsignalleitung 17" mit der sekundären Lastsignalleitung 17'. Bei einem Anstieg des primären Lastdruckes p_{LS_primär} und einer erforderlichen Verstärkung des Lastsignals wird das Druckregelventil 38 gegen die Kraft der Druckfeder 41 in Richtung seiner zweiten Stellung verschoben, in der der Druck der Druckleitung 10' auf die sekundäre Lastsignalleitung 17' übertragen wird. Der in der vorgenannten Weise erzeugte sekundäre Lastdruck p_{LS_sekundär} in der Lastsignalleitung 17' wird, wie die Figur 1 erkennen lässt, der Lastsignalleitung 17 und somit der Druckwaage 18 zugeführt, so dass eine entsprechende Verstellung der Verstellpumpe 3 über den Verstellzylinder 16 erfolgt.

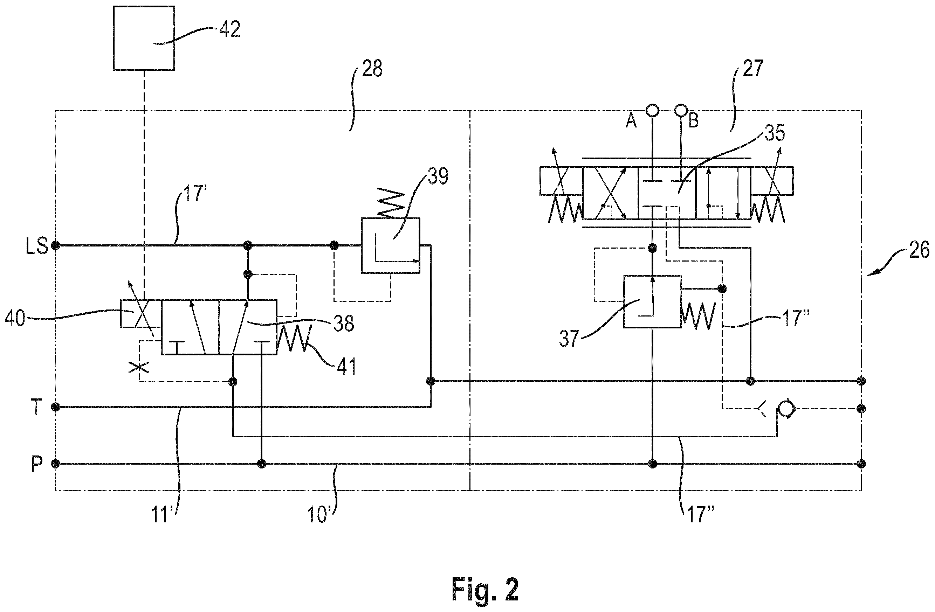

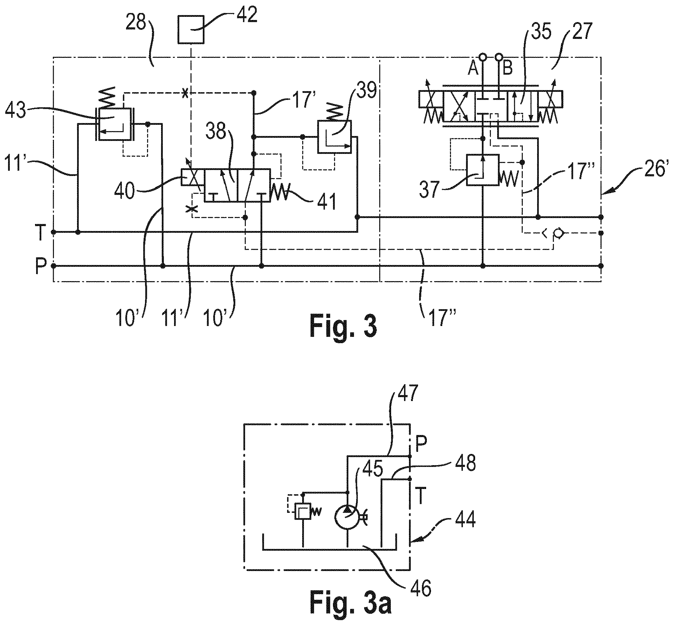

Ein in den Figuren 3 und 3a gezeigter hydraulischer Schaltplan betrifft eine Lastsignalsteuerung, die mit einem als Open-Center-System ausgeführten Hydrauliksystem einer Arbeitsmaschine zusammenwirken soll. Da die in Figur 3 dargestellte Steuereinheit Ventile aufweist, die bereits im Zusammenhang mit der Ausführungsform nach den Figuren 1 und 2 beschrieben sind, werden für diese übereinstimmenden Bauelemente die gleichen Bezugszeichen verwendet und es wird darauf verzichtet, diese nochmals zu erläutern.

Der Unterschied der Ausführungsform der Steuereinheit 26' gemäß der Figur 3 gegenüber der nach der Figur 2 besteht darin, dass die sekundäre Lastsignalleitung 17' nicht aus dem Steuerblock 28 austritt und dort somit auch nicht über einen Power-Beyond-Anschluss mit dem Hydrauliksystem des Schleppers verbunden ist. Im Gegensatz dazu dient eine Umlaufdruckwaage 43 dazu, stets einen ausreichenden Volumenstrom für den oder die Verbraucher sicher zu stellen.

Die Umlaufdruckwaage 43 ist eingangsseitig an die Druckleitung 10' und ausgangsseitig an die Rücklaufleitung 11' angeschlossen. Die Umlaufdruckwaage 43 wird je nach Stellung des Druckregelventils 28 über die sekundäre Lastsignalleitung 17' mit dem primären Lastdruck p_{LS_primär} der primären Lastsignalleitung 17" oder mit dem Druck der Druckleitung 10' pₚ beaufschlagt, während auf die Umlaufdruckwaage 43 als Steuerdruck der Druck pₚ der Druckleitung 10' wirkt. Eine wahlweise Veränderung des Umlaufdruckes der Umlaufdruckwaage 43 erfolgt dabei über das Druckregelventil 38, das übereinstimmend mit der Anordnung nach den Figuren 1 und 2 gesteuert wird, nämlich hydraulisch über die primäre Lastsignalleitung 17" und elektromagnetisch über die Betätigung 40.

In der Figur 3 befindet sich das Druckregelventil 38 in einer Stellung, in der sowohl über die primäre Lastsignalleitung 17" als von der ECU 42 kein erhöhter Volumenstrombedarf ermittelt ist. Daher kann die Umlaufdruckwaage 43 bei einem Überschreiten eines Grenzwertes des Druckes pₚ in der Druckleitung 10' diese mit der Rücklaufleitung 11' verbinden.

Wird hingegen für die Betätigung eines mit dem Wegeventil 35 verbundenen Verbrauchers ein erhöhter Volumenstrombedarf angefordert, so führt dies, wie bereits im Zusammenhang mit den Figuren 1 und 2 erläutert, zu einer entsprechenden Betätigung des Druckregelventils 38 in seine zweite Stellung, in der es die Druckleitung 10' mit der die Umlaufdruckwaage 43 steuernden sekundären Lastsignalleitung 17' verbindet. Dadurch wird der entsprechende mit der Rücklaufleitung 11' verbindbare Zweig der Druckleitung 10' so weit gedrosselt, dass die benötigte Menge des Druckmittels aus der Druckleitung 10' dem Wegeventil 35 und somit dem Verbraucher zugeführt werden kann.

Wie weiterhin aus der Figur 3 hervorgeht, verfügt der zweite Steuerblock 28 der Steuereinheit 26 nur über Anschlüsse P der Druckleitung 10' und T der Rücklaufleitung 11', die entsprechend der Figur 1 mit einem Hydrauliksystem der Arbeitsmaschine verbunden werden sollen. Dieses in der Figur 3a mit 44 bezeichnete und nur ausschnittsweise dargestellte Hydrauliksystem 44 weist eine Konstantpumpe 45 auf, die Druckmittel aus einem Tank 46 in eine Druckleitung 47 fördert. Weiterhin mündet in den Tank 46 eine Rücklaufleitung 48. In der Darstellung der Figur 3a wird darauf verzichtet, entsprechende Steuergeräte, die innerhalb des Hydrauliksystems 44 der Arbeitsmaschine mit der Druckleitung 47 und der Rücklaufleitung 48 verbunden sind, darzustellen, da eine derartige Anordnung allgemein bekannt ist. Die jeweiligen Anschlüsse P und T des Hydrauliksystems 44 und der Steuereinheit 26 sollen über ein Power-Beyond-System miteinander verbunden sein.

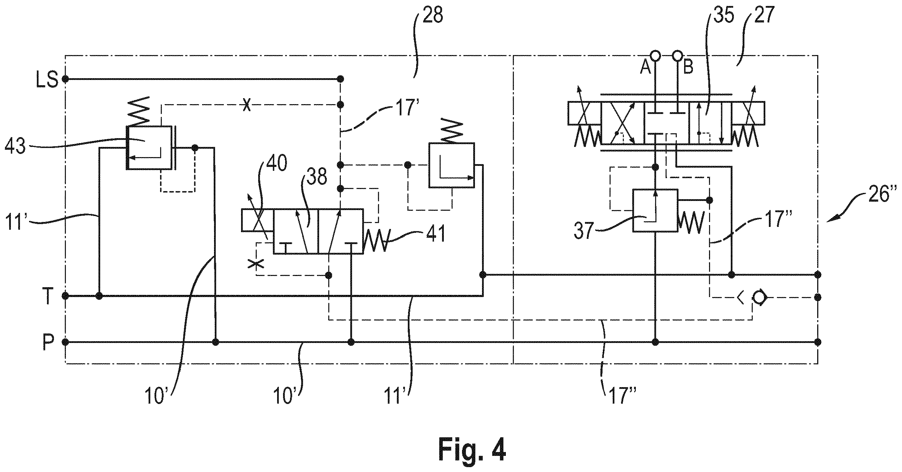

Weiterhin ist in der Figur 4 eine Ausbildung einer Steuereinheit 26" dargestellt, bei der die sekundäre Lastsignalleitung 17' in Übereinstimmung mit der Figur 2 aus dem zweiten Steuerblock 28, den Anschlüssen P und T benachbart, herausgeführt ist und zusätzlich über einen Leitungsabschnitt, der dem nach Figur 3 entspricht, mit der Umlaufdruckwaage 43 verbunden ist. Eine derartige universell verwendbare Steuereinheit 26" kann folglich, je nach Ausbildung des Hydrauliksystems der Arbeitsmaschine, wahlweise mit einer über das Lastsignal gesteuerten Verstellpumpe 3 oder mit einer Konstantpumpe 45 betrieben werden.

In ersterem Fall wird die Umlaufdruckwaage 43 blockiert bzw. der zur Rücklaufleitung 11' führende Leitungsabschnitt der Druckleitung 10' verschlossen. Dann kommuniziert die sekundäre Lastsignalleitung 17' mit der Lastsignalleitung 17 des Hydrauliksystems 1. Soll hingegen ein Betrieb mit einem Hydrauliksystem 44 nach Figur 3a, also mit einer Konstantpumpe 45 erfolgen, so wird der Anschluss LS der sekundären Lastsignalleitung 17' verschlossen. In vorteilhafter Weise ergibt sich somit die Steuereinheit 26", die in der Arbeitshydraulik 25 eines Anbaugerätes vorgesehen ist und nur durch geringfügige Änderungen für den Betrieb mit einem der beiden Hydrauliksysteme 1 oder 2 umgerüstet werden muss. Der Hersteller des Anbaugeräts kann dieses folglich innerhalb der Serie stets mit der gleichen Steuereinheit ausrüsten.

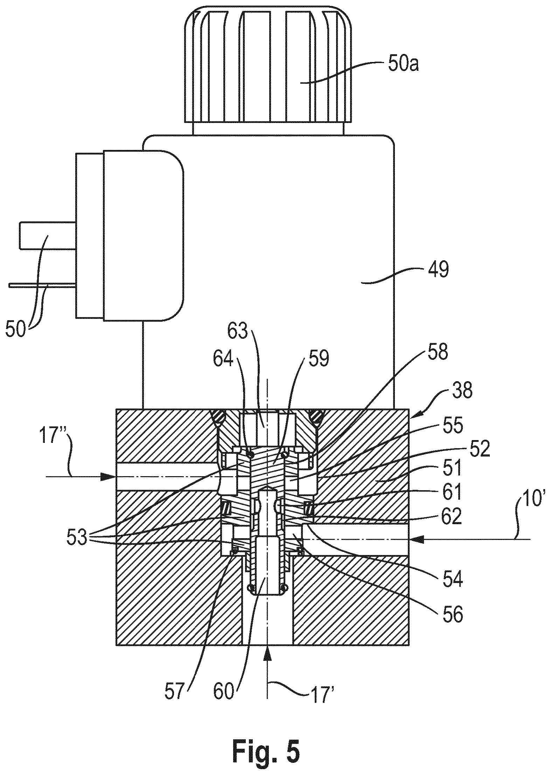

Schließlich ist in der Figur 5 eine Ausführungsform des Druckregelventils 38 dargestellt. Von der elektromagnetischen Betätigung 40 ist nur ein Gehäuse 49 sichtbar, das einen Elektromagneten aufweist und mit Stromanschlüssen 50 versehen ist. Außerhalb des Gehäuses 49 befindet sich eine Fixiermutter 50a, die zur Befestigung einer nicht dargestellten Magnetspule im Inneren des Gehäuses dient. Ein Ventilgehäuse 51 des Druckregelventils 38 weist eine gestuft ausgebildete Aufnahmebohrung 52 auf, in der eine holzylindrisch ausgebildete Cartridgehülse 53 angeordnet ist. In die Aufnahmebohrung münden die primäre Lastsignalleitung 17" und die Druckleitung 10' ein. Konzentrisch zur Cartridgehülse 53 verläuft die sekundäre Lastsignalleitung 17'.

Die Cartridgehülse 53 weist einen mit einer Radialdichtung versehenen radialen Bund 54 auf und dichtet auf diese Weise einen mit der primären Lastsignalleitung 17" verbundenen Ringraum gegenüber einem mit der Druckleitung 10' verbunden Ringraum ab. Weiterhin sind in der Cartridgehülse 53 in Längsrichtung zueinander beabstandete Querbohrungen 55 und 56 vorgesehen, von denen in der Figur 5 die Querbohrung 55 mit dem Anschluss der primären Lastsignalleitung 17" und die Querbohrung 56 mit dem Anschluss der Druckleitung 10' kommunizieren. An einer Innenmantelfläche 58 der Cartridgehülse 53 ist ein als Regelkolben dienender Ventilschieber 59 verschiebbar geführt, wobei dieser eine gestufte als Sackloch ausgebildete Längsbohrung 60, eine im Endbereich des Sacklochs verlaufende Querbohrung 61 sowie an dessen Außenmantel eine von der Querbohrung 61 ausgehende Steuernut 62 aufweist. An einer Stirnfläche des inneren Ventilschiebers 59 greift eine Ankerstange 63 der elektromagnetischen Betätigung 40 an.

In der Figur 5 befindet sich der Ventilschieber 59 in seiner maximal verschobenen Position. Dabei schlägt der innere Ventilschieber 59, der über die Ankerstange 63 unabhängig von der jeweiligen Lage des äußeren Ventilschiebers 53 betätigbar ist, mit einem als axiale Wegbegrenzung dienenden Federring 64 stirnseitig an der Cartridgehülse 53 an. In dieser Stellung ist die Druckleitung 10' über die Querbohrung 56, die Steuernut 62, die Querbohrung 61 und die Längsbohrung 60 mit der sekundären Lastsignalleitung 17' verbunden.

Der sekundäre Lastdruck p_{LS_sekundär} in der Lastsignalleitung 17' kann so weit erhöht werden, bis sich am Ventilschieber 59 ein Kräftegleichgewicht zwischen der Magnetkraft und dem Primärdruck p_{LS_primär} einerseits und dem sekundären Lastdruck p_{LS_sekundär} andererseits einstellt und der Ventilschieber 59 in eine Mittellage zurückbewegt wird, wodurch die Druckdifferenz in der gewählten Größe konstant gehalten wird. In Übereinstimmung mit den Figuren 1, 2 und 3 kann auch eine Druckfeder (siehe Druckfeder 41 in den Figuren 1, 2 und 3), deren Federkraft gleich gerichtet mit dem sekundäre Lastdruck p_{LS_sekundär} ist; diese Druckfeder, die nicht zwingend erforderlich ist, hat gegebenenfalls einen positiven Einfluss auf das Schwingverhalten des Druckregelventils 38.

### Bezugszeichen

- 1: Hydrauliksystem einer Arbeitsmaschine
- 2: Tank
- 3: Verstellpumpe
- 4: Hydraulikzylinder
- 5: Hydraulikzylinder
- 6: Verbraucher
- 7: Verbraucher
- 8: Steuergerät
- 9: Steuergerät
- 10: Druckleitung
- 10': Druckleitung von 25
- 11: Rücklaufleitung
- 11': Rücklaufleitung von 25
- 12: Arbeitsleitung
- 13: Arbeitsleitung
- 14: Arbeitsleitung
- 15: Arbeitsleitung
- 16: Verstellzylinder
- 17: Lastsignalleitung
- 17': sekundäre Lastsignalleitung von 25
- 17": primäre Lastsignalleitung von 25
- 18: Druckwaage
- 19: Druckregler
- 20: Druckfeder von 18
- 21: Wechselventil
- 22: Sektionsdruckwaage
- 23: Sektionsdruckwaage
- 24: Power-Beyond-Anschlusssystem
- 25: Arbeitshydraulik eines Anbaugerätes
- 26: Steuereinheit von 25 für Closed-Center-System
- 26': Steuereinheit von 25 für Open-Center-System
- 26": Steuereinheit von 25 sowohl für Closed- als auch Open-Center-System

- 27: erster Steuerblock von 26
- 28: zweiter Steuerblock von 26 mit Regeleinheit
- 29: Remote-Anschluss P des Hydrauliksystems
- 29': Remote-Anschluss P der Arbeitshydraulik
- 30: Remote-Anschluss LS des Hydrauliksystems
- 30': Remote-Anschluss LS der Arbeitshydraulik
- 31: Remote-Anschluss T des Hydrauliksystems
- 31': Remote-Anschluss T der Arbeitshydraulik
- 32: Hydraulikschlauch
- 33: Hydraulikschlauch
- 34: Hydraulikschlauch
- 35: Wegeventil von 26
- 36: Verbraucher
- 37: Zulaufdruckwaage von 26
- 37a: Druckfeder von 37
- 38: Druckregelventil von 26
- 39: Druckbegrenzungsventil von 26
- 40: elektromagnetische Betätigung von 38
- 41: Druckfeder von 38
- 42: ECU
- 43: Umlaufdruckwaage
- 44: Hydrauliksystem
- 45: Konstantpumpe
- 46: Tank
- 47: Druckleitung
- 48: Rücklaufleitung
- 49: Gehäuse
- 50: Stromanschlüssen
- 50a: Fixiermutter
- 51: Ventilgehäuse
- 52: Aufnahmebohrung
- 53: Cartridgehülse
- 54: radialer Bund von 53
- 55: Querbohrung mit Steuerkante für Druckabbau
- 56: Querbohrung mit Steuerkante für Druckaufbau
- 57: axial wirkende Dichtung
- 58: Innenmantelfläche von 53
- 59: Ventilschieber
- 60: Längsbohrung von 59
- 61: Querbohrungen von 59
- 62: ringförmige Steuernut von 59
- 63: Ankerstange
- 64: Federring

- A: Arbeitsanschluss
- B: Arbeitsanschluss
- P: Anschluss der Druckleitung
- T: Anschluss der Rücklaufleitung
- LS: Anschluss der Lastsignalleitung
- p_{LS}: Druck in Lastsignalleitung 17
- p_{LS_primär}: Druck in Lastsignalleitung 17"
- p_{LS_sekundär}: Druck im Lastsignalleitung 17'
- pₚ: Förderdruck der Verstellpumpe 3
- p_{T}: Druck in der Rücklaufleitung 11
- Δp_{LS}: Druckdifferenz zwischen Förderdruck pₚ und Lastdruck p_{LS}

## Patentansprüche

1. Land- oder bauwirtschaftlich nutzbare Arbeitsmaschine mit Anbaugerät, wobei das Anbaugerät eine Lastsignalsteuerung seiner Arbeitshydraulik (25) umfasst, die zumindest über einen Druckanschluss (P) und einen Tankanschluss (T) mit einem Hydrauliksystem (1, 44) der land- oder bauwirtschaftlich nutzbaren Arbeitsmaschine verbunden ist, mit zumindest einem über ein Wegeventil (35) gesteuerten Verbraucher (36), über den in einer primären Lastsignalleitung (17") ein primärer Lastdruck (p_{LS_primär}) erzeugbar ist, wobei der primäre Lastdruck (p_{LS_primär}) einer Steuereinheit (26, 26', 26"), die einen Volumenstrom in einer zu dem zumindest einen Verbraucher (36) führenden Druckleitung (10') steuert, zugeführt wird und wobei in der Steuereinheit (26, 26', 26") eine bedarfsgerechte Druckanhebung des primären Lastdrucks (p_{LS_primär}) auf ein Druckniveau eines sekundären Lastdrucks (p_{LS_sekundär}) erfolgt, **dadurch gekennzeichnet, dass** die Steuereinheit (26, 26', 26") innerhalb der Arbeitshydraulik (25) des Anbaugeräts angeordnet ist und ein Druckregelventil (38) aufweist, das eingangsseitig mit der Druckleitung (10') und der primären Lastsignalleitung (17") sowie ausgangsseitig mit einer sekundären Lastsignalleitung (17') verbunden ist, wobei ein Regelkolben des Druckregelventils (38) einerseits mit dem primären Lastdruck (p_{LS_primär}) sowie andererseits mit dem sekundären Lastdruck (p_{LS_sekundär}) beaufschlagt ist.

2. Land- oder bauwirtschaftlich nutzbare Arbeitsmaschine mit Anbaugerät nach Patentanspruch 1, **dadurch gekennzeichnet, dass** das Druckregelventil (38) neben seiner Steuerung über den primären Lastdruck (p_{LS_primär}) ein in die gleiche Betätigungsrichtung wirkendes Servomittel aufweist, mit der der Regelkolben zur Anhebung des sekundären Lastdruckes (p_{LS_sekundär}) um einen einstellbaren Druckwert mit einer zusätzlichen Kraft beaufschlagbar ist.

3. Land- oder bauwirtschaftlich nutzbare Arbeitsmaschine mit Anbaugerät nach Patentanspruch 2, **dadurch gekennzeichnet, dass** das Servomittel als elektromagnetische Steuerung (40) ausgebildet ist.

4. Land- oder bauwirtschaftlich nutzbare Arbeitsmaschine mit Anbaugerät nach einem der Patentansprüche 1 oder 2, **dadurch gekennzeichnet, dass** das Druckregelventil (38) als 3/2-Wegeventil ausgebildet ist.

5. Land- oder bauwirtschaftlich nutzbare Arbeitsmaschine mit Anbaugerät nach Patentanspruch 3, **dadurch gekennzeichnet, dass** die elektromagnetische Betätigung (40) des Druckregelventils (38) über eine ECU (42) einstellbar ist, wobei die Kraft des Magneten proportional einem in Abhängigkeit vom primären Lastdruck p_{LS_primär} geregelten Strom ist.

6. Land- oder bauwirtschaftlich nutzbare Arbeitsmaschine mit Anbaugerät nach Patentanspruch 5, **dadurch gekennzeichnet, dass** die ECU (42) zur Ermittlung einer minimal erforderlichen Anhebung des sekundären Lastdruckes (p_{LS_sekundär}) mit Sensoren verbunden und eine Durchführung dieses Vorgangs in einem Kalibrierzyklus vorgesehen ist.

7. Land- oder bauwirtschaftlich nutzbare Arbeitsmaschine mit Anbaugerät nach Patentanspruch 1, **dadurch gekennzeichnet, dass** dem zumindest einen Wegeventil (35) eine in der Druckleitung (10') angeordnete Zulaufdruckwaage (37) vorgeschaltet ist, die einerseits über einen Druck seines Druckanschlusses des Wegeventils (35) und andererseits über den primären Lastdruck (p_{LS_primär}) sowie eine Druckfeder (37a) betätigt ist.

8. Land- oder bauwirtschaftlich nutzbare Arbeitsmaschine mit Anbaugerät nach Patentanspruch 1, **dadurch gekennzeichnet, dass** das Hydrauliksystem (1) der Arbeitsmaschine als Hauptpumpe eine Verstellpumpe (3) aufweist, deren Fördervolumen über einen Verstellzylinder (16) einstellbar ist, wobei der einer Druckwaage (18) zugeführte Lastdruck (p_{LS}) über diese zur Bildung einer ersten Druckdifferenz (Δp_{LS}) mit einem Pumpendruck (pₚ) vergleichbar ist und ein Förderstrom der Verstellpumpe (3) aufgrund dieser Druckdifferenz (Δp_{LS}) regelbar ist.

9. Land- oder bauwirtschaftlich nutzbare Arbeitsmaschine mit Anbaugerät nach Patentanspruch 8, **dadurch gekennzeichnet, dass** die sekundäre Lastsignalleitung (17') parallel zum Power-Beyond-Anschluss (24) mit einer Lastsignalleitung (17) des Hydrauliksystems verbunden ist.

10. Land- oder bauwirtschaftlich nutzbare Arbeitsmaschine mit Anbaugerät nach Patentanspruch 1, **dadurch gekennzeichnet, dass** das Hydrauliksystem (44) der Arbeitsmaschine als Hauptpumpe eine Konstantpumpe (45) aufweist, dass die Steuereinheit (26') eine parallel zum Druckregelventil (38) angeordnete Umlaufdruckwaage (43) aufweist, die eingangsseitig mit der Druckleitung (10') und ausgangsseitig mit einer Tankleitung (11') verbunden ist, und dass die Umlaufdruckwaage (43) einerseits über den Druck (pₚ) der Druckleitung (10') und andererseits über den sekundären Lastdruck (p_{LS_sekundär}) vorgesteuert ist.

11. Land- oder bauwirtschaftlich nutzbare Arbeitsmaschine mit Anbaugerät nach Patentanspruch 1, **dadurch gekennzeichnet, dass** zur Druckbegrenzung des sekundären Lastdrucks (p_{LS_sekundär}) zwischen der sekundären Lastdruckleitung (17') und der primären Lastdruckleitung (17") ein erstes Druckbegrenzungsventil (39) angeordnet ist, das über den sekundären Lastdruck (p_{LS_sekundär}) gesteuert wird.

12. Land- oder bauwirtschaftlich nutzbare Arbeitsmaschine mit Anbaugerät nach den Patentansprüchen 8 oder 10, **dadurch gekennzeichnet, dass** die Steuereinheit (26") wahlweise an ein als Open-Center-System oder als Closed-Center-System ausgebildetes Hydrauliksystem (44, 1) der Arbeitsmaschine anschließbar ist, wobei die Umlaufdruckwaage (43) bei dessen Betrieb in einem Closed-Center-System blockiert ist.

13. Land- oder bauwirtschaftlich nutzbare Arbeitsmaschine mit Anbaugerät nach Patentanspruch 2, **dadurch gekennzeichnet, dass** das Druckregelventil (38) einen Ventilschieber (59) aufweist, der innerhalb einer in einem Ventilgehäuse (51) angeordneten Cartridgehülse (53) begrenzt verschiebbar geführt ist, wobei der Ventilschieber (59) an einer ersten Stirnfläche mit dem primären Lastdruck (p_{LS_primär}) und über eine Ankerstange (63) der elektromagnetischen Betätigung (40) mit einer Kraft beaufschlagbar ist, dass der Ventilschieber (59) mit einem hohlkolbenartig ausgebildeten Ende in Richtung der zu diesem konzentrisch verlaufenden Lastsignalleitung (17') weist und dass über Steuerkanten (54, 62) sowie Querbohrungen (61) des Ventilschieber (59) sowie des Ventilgehäuses (51) wahlweise eine Druckmittelströmung zwischen der sekundären Lastsignalleitung (17') einerseits sowie der primären Lastsignalleitung (17") oder der Druckleitung (10') andererseits herstellbar ist..

## Claims

1. A working machine for use in agriculture or construction with an attachment, wherein the attachment comprises a load signal control for its working hydraulics (25) which is connected to a hydraulic system (1, 44) of the working machine for use in agriculture or construction by means of at least a pressure connection (P) and a tank connection (T), with at least one consumer (36) controlled by means of a directional control valve (35), by means of which a primary load pressure (p_{LS_primary}) can be produced in a primary load signal line (17"), wherein the primary load pressure (p_{LS_primary}) is supplied to a control unit (26, 26', 26") which controls a volume flow in a pressure line (10') leading to the at least one consumer (36), and wherein, in the control unit (16, 26', 26"), an appropriate rise in the pressure of the primary load pressure (p_{LS_primary}) is executed to a pressure level of a secondary load pressure (p_{LS_secondary}), **characterized in that** the control unit (26, 26', 26") is disposed within the working hydraulics (25) of the attachment and has a pressure regulation valve (38) which is connected on the input side to the pressure line (10') and the primary load signal line (17") as well as on the output side to a secondary load signal line (17'), wherein a control piston of the pressure regulation valve (38) is pressurised on one side with the primary load pressure (p_{LS_primary}) as well as on the other side with the secondary load pressure (p_{LS_secondary}).

2. The working machine for use in agriculture or construction with an attachment according to patent claim 1, **characterized in that** in addition to its control by means of the primary load pressure (p_{LS_primary}), the pressure regulation valve (38) has a servo means which acts in the same actuation direction, by means of which pressure can be applied to the control piston in order to raise the secondary load pressure (p_{LS_secondary}) by an adjustable value of pressure with an additional force.

3. The working machine for use in agriculture or construction with an attachment according to patent claim 2, **characterized in that** the servo means is configured as an electromagnetic control (40).

4. The working machine for use in agriculture or construction with an attachment according to patent claim 1 or claim 2, **characterized in that** the pressure regulation valve (38) is configured as a 3/2 port directional control valve.

5. The working machine for use in agriculture or construction with an attachment according to patent claim 3, **characterized in that** the electromagnetic actuation (40) of the pressure regulation valve (38) can be adjusted by means of an ECU (42), wherein the force of the magnet is proportional to a current which is controlled as a function of the primary load pressure (p_{LS_primary}).

6. The working machine for use in agriculture or construction with an attachment according to patent claim 5, **characterized in that** in order to determine a minimum required rise in the secondary load pressure (p_{LS_secondary}), the ECU (42) is connected to sensors and is provided to carry out this procedure in a calibration cycle.

7. The working machine for use in agriculture or construction with an attachment according to patent claim 1, **characterized in that** a supply pressure balance valve (37) disposed in the pressure line (10') is connected upstream of the at least one directional control valve (35) which on one side is actuated by means of a pressure of its pressure connection of the directional control valve (35) and on the other side by means of the primary load pressure (p_{LS_primary}) as well as a pressure spring (37a).

8. The working machine for use in agriculture or construction with an attachment according to patent claim 1, **characterized in that** the hydraulic system (1) of the working machine has a variable displacement pump (3) as the main pump the displacement volume of which can be adjusted by means of a variable displacement cylinder (16), wherein the load pressure (p_{LS}) supplied to a pressure balance valve (18) can be compared with a pump pressure (Pₚ) thereby in order to form a first pressure difference (Δp_{LS}) and a displacement flow of the variable displacement pump (3) can be controlled on the basis of this pressure difference (Δp_{LS}).

9. The working machine for use in agriculture or construction with an attachment according to patent claim 8, **characterized in that** the secondary load signal line (17') is connected to a load signal line (17) of the hydraulic system in parallel to the power beyond connection (24).

10. The working machine for use in agriculture or construction with an attachment according to patent claim 1, **characterized in that** the hydraulic system (44) of the working machine has a fixed displacement pump (45) as the main pump, **in that** the control unit (26') has a circulation pressure balance valve (43) disposed in parallel to the pressure regulation valve (38) which is connected on the input side to the pressure line (10') and on the output side to a tank line (11'), and **in that** the circulation pressure balance valve (43) is pre-controlled on one side by means of the pressure (pₚ) of the pressure line (10') and on the other side by means of the secondary load pressure (p_{LS_secondary}).

11. The working machine for use in agriculture or construction with an attachment according to patent claim 1, **characterized in that** in order to limit the pressure of the secondary load pressure (p_{LS_secondary}), a first pressure limiting valve (39) is disposed between the secondary load pressure line (17') and the primary load pressure line (17") and is controlled by means of the secondary load pressure (p_{LS_secondary}).

12. The working machine for use in agriculture or construction with an attachment according to patent claim 8 or 10, **characterized in that** the control unit (26") can be selectively connected to a hydraulic system (44, 1) of the working machine configured as an open centre system or as a closed centre system, wherein the circulation pressure balance valve (43) is blocked when it is operated in a closed centre system.

13. The working machine for use in agriculture or construction with an attachment according to patent claim 2, **characterized in that** the pressure regulation valve (38) has a valve slide (59) which is displaceably guided in a limited manner inside a cartridge sleeve (53) disposed in a valve housing (51), wherein the primary load pressure (p_{LS_primary}) can be applied to a first front end of the valve slide (59) and a force can be applied to an anchor rod (63) of the electromagnetic actuator (40), **in that** the valve slide (59) is provided with an end configured as a hollow piston in the direction of the load signal line (17') running concentrically therewith and **in that**, by means of control edges (54, 62) as well as transverse holes (61) of the valve slide (59) as well as of the valve housing (51), a flow of pressure medium can be selectively produced between the secondary load signal line (17') on one side as well as the primary load signal line (17") or the pressure line (10') on the other side.

## Revendications

1. Machine de travail utilisable en agriculture ou dans les travaux publics comprenant un outil rapporté, l'outil rapporté incluant une commande de signal de charge de son hydraulique de travail (25) qui est reliée à un système hydraulique (1, 44) de la machine de travail utilisable en agriculture ou dans les travaux publics au moins par l'intermédiaire d'un raccord de pression (P) et d'un raccord de réservoir (T), comprenant au moins un organe utilisateur (36) qui est commandé par l'intermédiaire d'une valve directionnelle (35) et par l'intermédiaire duquel une pression de charge primaire (p_{LS_primär}) peut être produite dans une ligne de signal de charge primaire (17"), la pression de charge primaire (p_{LS_primär}) étant dirigée vers une unité de commande (26, 26', 26") qui commande un flux volumique dans une ligne de pression (10') menant au au moins un organe utilisateur (36), et dans l'unité de commande (26, 26', 26") s'effectuant une augmentation de pression, conforme aux besoins, de la pression de charge primaire (p_{LS_primär}) à un niveau de pression d'une pression de charge secondaire (p_{LS_sekundär}), **caractérisée en ce que** l'unité de commande (26, 26', 26") est disposée à l'intérieur de l'hydraulique de travail (25) de l'outil rapporté et comporte une valve de régulation de pression (38) qui est reliée, côté entrée, à la ligne de pression (10') et à la ligne de signal de charge primaire (17") ainsi que, côté sortie, à une ligne de signal de charge secondaire (17'), un piston de régulation de la valve de régulation de pression (38) étant sollicité, d'une part, par la pression de charge primaire (p_{LS_primär}) ainsi que, d'autre part, par une pression de charge secondaire (p_{LS_sekundär}).

2. Machine de travail utilisable en agriculture ou dans les travaux publics, comprenant un outil rapporté, selon la revendication 1, **caractérisée en ce que** la valve de régulation de pression (38) comporte, en plus de sa commande par l'intermédiaire de la pression de charge primaire (p_{LS_primär}), un moyen asservi qui fonctionne dans la même direction d'actionnement et avec lequel le piston de régulation peut être soumis à une force supplémentaire pour augmenter la pression de charge secondaire (p_{LS_sekundär}) d'une valeur de pression réglable.

3. Machine de travail utilisable en agriculture ou dans les travaux publics, comprenant un outil rapporté, selon la revendication 2, **caractérisée en ce que** le moyen asservi est conformé en commande électromagnétique (40).

4. Machine de travail utilisable en agriculture ou dans les travaux publics, comprenant un outil rapporté, selon une des revendications 1 ou 2, **caractérisée en ce que** la valve de régulation de pression (38) est conformée en valve directionnelle à 3 voies/2 positions.

5. Machine de travail utilisable en agriculture ou dans les travaux publics, comprenant un outil rapporté, selon la revendication 3, **caractérisée en ce que** l'actionnement électromagnétique (40) de la valve de régulation de pression (38) est réglable par l'intermédiaire d'une ECU (42), la force de l'aimant étant proportionnelle à un courant régulé en fonction de la pression de charge primaire p_{LS_primär}.

6. Machine de travail utilisable en agriculture ou dans les travaux publics, comprenant un outil rapporté, selon la revendication 5, **caractérisée en ce que** l'ECU (42) est relié à des capteurs pour déterminer une augmentation minimale nécessaire de la pression de charge secondaire ((p_{LS_sekundär}), et une réalisation de cette opération est prévue dans un cycle de calibrage.

7. Machine de travail utilisable en agriculture ou dans les travaux publics, comprenant un outil rapporté, selon la revendication 1, **caractérisée en ce qu'**en amont de la au moins une valve directionnelle (35) est disposée une balance de pression d'entrée (37) qui est implantée sur la ligne de pression (10') et qui est actionnée, d'une part, par l'intermédiaire d'une pression de son raccord de pression de la valve directionnelle (35) et, d'autre part, par l'intermédiaire de la pression de charge primaire (p_{LS_primär}) ainsi que d'un ressort de compression (37a) .

8. Machine de travail utilisable en agriculture ou dans les travaux publics, comprenant un outil rapporté, selon la revendication 1, **caractérisée en ce que** le système hydraulique (1) de la machine de travail comporte comme pompe principale, une pompe de réglage (3) dont le volume de refoulement est réglable par l'intermédiaire d'un cylindre de réglage (16), la pression de charge (p_{LS}) amenée à une balance de pression (18) pouvant être comparée par l'intermédiaire de celle-ci à une pression de pompe (pₚ) pour former une première différence de pression (Δp_{LS}), et un flux de refoulement de la pompe de réglage (3) étant réglable sur la base de cette différence de pression (Δp_{LS}).

9. Machine de travail utilisable en agriculture ou dans les travaux publics, comprenant un outil rapporté, selon la revendication 8, **caractérisée en ce que** la ligne de signal de charge secondaire (17') est reliée à une ligne de signal de charge (17) du système hydraulique parallèlement au raccord « power beyond » (24).

10. Machine de travail utilisable en agriculture ou dans les travaux publics, comprenant un outil rapporté, selon la revendication 1, **caractérisée en ce que** le système hydraulique (44) de la machine de travail comporte comme pompe principale une pompe constante (45), **en ce que** l'unité de commande (26') comporte une balance de pression de circulation (43) qui est disposée parallèlement à la valve de régulation de pression (38) et qui est reliée, côté entrée, à la ligne de pression (10') et, côté sortie, à une ligne de réservoir (11'), et **en ce que** la balance de pression de circulation (43) est précontrainte, d'une part, par l'intermédiaire de la pression (pₚ) de la ligne de pression (10') et, d'autre part, par l'intermédiaire de la pression de charge secondaire (p_{LS_sekundär}).

11. Machine de travail utilisable en agriculture ou dans les travaux publics, comprenant un outil rapporté, selon la revendication 1, **caractérisée en ce que** pour la limitation de pression de la pression de charge secondaire (p_{LS_sekundär}) est disposée entre la ligne de pression de charge secondaire (17') et ligne de pression de charge primaire (17") une première valve de limitation de pression (39) qui est commandée par l'intermédiaire de la pression de charge secondaire (p_{LS_sekundär}).

12. Machine de travail utilisable en agriculture ou dans les travaux publics, comprenant un outil rapporté, selon les revendications 8 ou 10, **caractérisée en ce que** l'unité de commande (26") peut être reliée sélectivement à un système hydraulique (44, 1) de la machine de travail conformé en système « open center » ou en système « closed center », la balance de pression de circulation (43) étant bloquée lors du fonctionnement de celui-ci en système « closed center ».

13. Machine de travail utilisable en agriculture ou dans les travaux publics, comprenant un outil rapporté, selon la revendication 2, **caractérisée en ce que** la valve de régulation de pression (38) comporte un tiroir de valve (59) qui est guidé avec une possibilité de coulissement limitée à l'intérieur d'un manchon de cartouche (53) disposé dans un boîtier de valve (51), le tiroir de valve (59) pouvant être sollicité au niveau d'une première face frontale avec la pression de charge primaire (p_{LS_primär}) et par l'intermédiaire d'une tige d'induit (63) du moyen d'actionnement électromagnétique (40) avec une force, **en ce que** le tiroir de valve (59) est orienté avec une extrémité conformée en piston creux en direction de la ligne de signal de charge (17') s'étendant concentriquement à lui, et **en ce qu'**une circulation d'agent de pression peut être établie sélectivement entre la ligne de signal de charge secondaire (17'), d'une part, ainsi que la ligne de signal de charge primaire (17") ou la ligne de pression (10'), d'autre part, par l'intermédiaire de rampes de distribution (54, 62) ainsi que de perçages transversaux (61) du tiroir de valve (59) ainsi que du boîtier de valve (51).
